# EUROPÄISCHE PATENTSCHRIFT

(11) **EP 3 047 240 B1**
(45) Veröffentlichungstag und Bekanntmachung des Hinweises auf die Patenterteilung: **03.10.2018**
(21) Anmeldenummer: 14750226.4
(22) Anmeldetag: 11.08.2014
(51) Int. Cl.: G01D 5/244

(54) **VERFAHREN ZUM HERSTELLEN EINER MAGNETEINHEIT FÜR EINE SENSOREINRICHTUNG ZUM ERFASSEN EINER EINEN ROTATIONSZUSTAND EINER LENKWELLE EINES KRAFTFAHRZEUGS CHARAKTERISIERENDEN MESSGRÖSSE, MAGNETEINHEIT, SENSOREINRICHTUNG UND KRAFTFAHRZEUG**
METHOD FOR PRODUCING A MAGNET UNIT FOR A SENSOR DEVICE FOR DETECTING A MEASURED VALUE CHARACTERISTIC OF A ROTATIONAL STATE OF A STEERING SHAFT OF A MOTOR VEHICLE, MAGNET UNIT, SENSOR DEVICE, AND MOTOR VEHICLE
PROCÉDÉ DE FABRICATION D'UNE UNITÉ D'AIMANT DESTINÉ À UN DISPOSITIF DE DÉTECTION SERVANT À DÉTECTER UNE GRANDEUR DE MESURE CARACTÉRISANT L'ÉTAT DE ROTATION D'UN ARBRE DE DIRECTION D'UN VÉHICULE AUTOMOBILE, UNITÉ D'AIMANT, DISPOSITIF DE DÉTECTION ET VÉHICULE AUTOMOBILE

(30) Priorität: 18.09.2013 DE 102013015452
(43) Veröffentlichungstag der Anmeldung: 27.07.2016
(73) Patentinhaber: Valeo Schalter und Sensoren GmbH, 74321 Bietigheim-Bissingen (DE)
(72) Erfinder: RACHUI, Dirk, 74321 Bietigheim-Bissingen (DE); THOM, Jens, 71034 Boeblingen (DE); FROEHLICH, Ekkehart, 74226 Nordheim (DE)
(86) Internationale Anmeldenummer: PCT/EP2014/067178
(87) Internationale Veröffentlichungsnummer: WO 2015/039809

(56) Entgegenhaltungen:
- EP-A1- 1 798 558
- EP-A2- 1 965 090
- EP-A2- 2 594 915
- DE-A1-102007 050 258
- DE-A1-102009 046 816
- US-A- 6 066 216
- US-A1- 2007 209 438

## Beschreibung

Die Erfindung betrifft ein Verfahren zum Herstellen einer Magneteinheit für eine Sensoreinrichtung zum Erfassen einer einen Rotationszustand einer Lenkwelle eines Kraftfahrzeugs charakterisierenden Messgröße. Es wird ein ringförmiges Magnetelement aus einem kunststoffgebundenen Magnetmaterial bereitgestellt. Außerdem wird eine Trägerhülse - beispielsweise aus Metall - bereitgestellt, über welche die Magneteinheit mit einem Wellenteil der Lenkwelle verbunden werden kann. Das Magnetelement und die Trägerhülse werden dann, insbesondere axial nebeneinander über jeweilige axiale Stirnseiten, miteinander verbunden. Die Erfindung betrifft außerdem eine Magneteinheit für eine Sensoreinrichtung eines Kraftfahrzeugs, mit einem ringförmigen Magnetelement und einer mit dem Magnetelement verbundenen Trägerhülse, über welche die Magneteinheit mit einem Wellenteil verbindbar ist. Des Weiteren betrifft die Erfindung eine Sensoreinrichtung sowie ein Kraftfahrzeug.

Drehmomentsensoreinrichtungen zur Erfassung eines auf eine Lenkwelle eines Kraftfahrzeugs aufgebrachten Drehmoments sind bereits Stand der Technik. Solche Drehmomentsensoreinrichtungen können beispielsweise bei elektrischen Lenksystemen eingesetzt werden. Eine solche Drehmomentsensoreinrichtung ist zum Beispiel aus dem Dokument US 2004/0194560 A1 sowie aus der Druckschrift DE 102 40 049 A1 bekannt. Die Drehmomentsensoreinrichtung ist dabei an zwei sich in axialer Richtung gegenüberliegenden Wellenteilen bzw. Teilwellen der Lenkwelle angebracht. An dem ersten Wellenteil ist ein Magnet - etwa ein Ringmagnet - angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter hingeleitet, welche dann den magnetischen Fluss an einen Magnetsensor - beispielsweise einen Hall-Sensor - abgeben.

Eine solche Drehmomentsensoreinrichtung ist außerdem aus dem Dokument DE 10 2007 043 502 A1 bekannt.

Außerdem sind aus dem Stand der Technik auch Lenkwinkelsensoreinrichtungen bekannt, welche zur Erfassung des aktuellen Lenkwinkels der Lenkwelle dienen. Eine solche Einrichtung ist zum Beispiel aus dem Dokument DE 10 2008 011 448 A1 als bekannt zu entnehmen. Eine Drehbewegung der Lenkwelle wird hier über ein Getriebe auf ein kleineres Zahnrad übertragen, welches einen Magneten trägt. Die Rotation des kleineren Zahnrades wird dann mithilfe eines Magnetsensors erfasst.

Zum Stand der Technik gehören auch solche Vorrichtungen, bei denen die Drehmomentsensoreinrichtung einerseits sowie die Lenkwinkelsensoreinrichtung andererseits integral als eine gemeinsame Einheit ausgebildet sind.

Vorliegend richtet sich das Interesse auf eine Magneteinheit einer Drehmomentsensoreinrichtung oder einer kombinierten Drehmoment- und Lenkwinkelsensoreinrichtung. Eine solche Magneteinheit besteht üblicherweise aus dem genannten Magnetelement, welches in Form eines Dauermagneten ausgebildet ist, sowie aus einer metallischen Hülse, über welche die Magneteinheit mit dem zugeordneten Wellenteil der Lenkwelle verbunden wird. Während die Hülse also aus Metall gebildet ist, ist das Magnetelement in der Regel aus einem mit Magnetpartikeln gefüllten Kunststoff bereitgestellt, der aufgrund des hohen Füllgrads relativ spröde ist. Die Hülse kann auf dem zugeordneten Wellenteil beispielsweise mittels Kleben, Schweißen, Verstemmen oder Pressen befestigt werden.

Aus der EP 1965090 A1 ist bekannt, dass ein Magnetring und eine Trägerhülse einer Sensoranordnung eines Drehlagers über ein elastisches Dämpfungselement miteinander verbunden werden können. Dazu wird das elastische Dämpfungselement mit dem Magnetring und der Trägerhülse verklebt und so eine radiale Anordnung beider Komponenten ermöglicht. Diese Lösung hat sich allerdings als nachteilig erwiesen, weil die Verbindung der Teile nicht zuverlässig gegenüber Temperatureinflüssen ist und so eine genaue und zuverlässige Sensoreinrichtung nicht gewährleistet werden kann. Außerdem ist der Fertigungsprozess der beschriebenen Vorrichtung sehr aufwendig und dadurch kostenintensiv.

Des Weiteren beschreibt die EP 2594915 A1 ein Verfahren zur Verbindung eines Sensorteils einer Sensoranordnung mit einem Wellenteil eines Kraftfahrzeugs insbesondere einer Lenkwelle, wobei mittels der Sensoranordnung eine einen Rotationszustand des Wellenteils charakterisierende Größe gemessen wird. Auf die Welle wird ein Kunststoffring drehfest angebracht. Dieser Kunststoffring wird mit einem Kunststoffträger des Sensorteils verschweißt. Dieser Kunststoffträger wiederum trägt das Magnetelement der Sensoreinrichtung. Auch hierbei handelt es sich um eine radiale Anordung der Sensorkomponenten.

Die EP 1798558 A1 und US 2007/0209438 A1 beschreiben jeweils gattungsgemäße Sensorvorrichtungen bzw. deren Herstellungsverfahren mit einem Halter und einer Magneteinheit, welche miteinander verbunden sind. An dem Übergang zwischen Halter und Magneteinheit ist ein flexibles Element bzw. ein Elastomer vorgesehen.

Eine besondere Herausforderung besteht darin, eine zuverlässige Verbindung zwischen dem Magnetelement einerseits und der Hülse andererseits bereitzustellen. Beim direkten Anspritzen des Magnetelements an die Hülse kommt es nämlich beim Abkühlen der Kunststoffschmelze zu Schrumpfspannungen, welche insbesondere in Verbindung mit den unterschiedlichen Wärmeausdehnungskoeffizienten der Hülse und des Magnetelements bei den im Betrieb auftretenden Temperaturunterschieden zur Bildung von Rissen in dem Magnetelement führen können. Aus diesem Grund wird in der Druckschrift EP 1 123 794 A1 vorgeschlagen, das Magnetelement nicht unmittelbar, sondern über ein Zwischenelement aus einem elastischen Material an der Hülse zu befestigen. Mit anderen Worten wird die Anbindung zwischen dem Magnetelement und der Metallhülse über einen elastischen Zwischenkunststoff in einem zusätzlichen Umspritzprozess hergestellt. Diese Lösung hat sich jedoch als relativ nachteilig erwiesen, weil der recht aufwändige Formschluss der zu verbindenden Teile und die für den Umspritzprozess benötigten Dichtflächen die in der Regel gewünschten, unterschiedlichen Durchmesser der Hülse und des Magnetelements und somit den entsprechenden Bauraum einschränken. Außerdem ist die vorgeschlagene Lösung verhältnismäßig aufwändig und kostenintensiv.

Eine weitere Lösung, wie die Hülse mit dem Magnetelement verbunden werden kann, ist in der DE 198 36 451 C2 beschrieben. Hier wird die Hülse mit dem kunststoffgebundenen Magnetmaterial umspritzt, wobei die Hülse ein laschenförmiges Teil aufweist, welches mit dem hochgefüllten Kunststoff umgeben und im hochgefüllten Kunststoff so angeordnet ist, dass es Schrumpfspannungen des Kunststoffs aufnimmt. Hier erfolgt die Verbindung der Hülse mit dem Magnetelement also in einem Spritzgussverfahren, wodurch wiederum Schrumpfspannungen erzeugt werden können.

Eine Magnetbaugruppe mit einem Magnetring, der mittels einer Trägerhülse auf einer Welle angebracht ist, ist des Weiteren aus dem Dokument DE 10 2008 047 466 A1 bekannt. Der Magnetring liegt hier radial über der Trägerhülse und ist zusätzlich über mindestens ein Zwischenstück mit der Trägerhülse verbunden.

Magnetbaugruppen sind des Weiteren aus den Dokumenten DE 10 2007 050 258 A1 sowie DE 10 2008 014 985 A1 bekannt.

Es geht vorliegend insbesondere um eine solche Magnetbaugruppe, bei welcher das Magnetelement einerseits und die Trägerhülse andererseits axial nebeneinander und somit nicht radial übereinander positioniert sind und über jeweilige axiale Stirnseiten miteinander verbunden sind. Eine solche Bauweise der Magneteinheit wird bei manchen Typen von Drehmomentsensoren aufgrund des zur Verfügung stehenden Bauraums benötigt. Eine solche Anordnung des Magnetelements einerseits und der Trägerhülse andererseits axial nebeneinander ist bereits aus der oben genannten Druckschrift EP 1 123 794 B1 bekannt. Wie bereits ausgeführt, hat sich diese Lösung jedoch als relativ nachteilig erwiesen, da der recht aufwändige Formschluss und die für den Umspritzprozess benötigten Dichtflächen die in der Regel benötigten unterschiedlichen Durchmesser der Hülse und des Magnetelements und somit den entsprechenden Bauraum einschränken. Insbesondere bei besonders beengten Bauraumverhältnissen kann es auch unmöglich sein, die für eine Abdichtung während der Umspritzung notwendigen Flächen am Bauteil oder im Werkzeug auszubilden.

Es ist Aufgabe der Erfindung, eine Lösung aufzuzeigen, wie bei einem Verfahren der eingangs genannten Gattung die Trägerhülse und das Magnetelement ohne viel Verbindungsaufwand und besonders zuverlässig miteinander verbunden werden können. Diese Aufgabe wird erfindungsgemäß durch ein Verfahren, durch eine Magneteinheit, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird eine Magneteinheit hergestellt, welche speziell für eine Sensoreinrichtung konzipiert wird, die zum Erfassen einer einen Rotationszustand einer Lenkwelle eines Kraftfahrzeugs charakterisierenden Messgröße dient, insbesondere eines Drehmoments und/oder eines Lenkwinkels. Es werden ein ringförmiges Magnetelement aus einem kunststoffgebundenen Magnetmaterial sowie eine Trägerhülse - zum Beispiel aus Metall - bereitgestellt. Die wulstartige Hülse dient zum Verbinden der Magneteinheit mit einem zugeordneten Wellenteil der Lenkwelle. Nach dem Bereitstellen des Magnetelements und der Trägerhülse werden diese Bauteile - insbesondere axial nebeneinander über jeweilige axiale Stirnseiten - miteinander verbunden. Vorzugsweise sind die Hülse einerseits und der Magnet andererseits dann axial nebeneinander angeordnet. Erfindungsgemäß ist vorgesehen, dass an der Trägerhülse - insbesondere an der axialen Stirnseite der Trägerhülse - ein Kunststoffelement bereitgestellt wird und das Verbinden des Magnetelements mit der Trägerhülse umfasst, dass das Kunststoffelement und das kunststoffgebundene Magnetmaterial des Magnetelements stoffschlüssig miteinander verbunden werden. Bevorzugt werden die axiale Stirnseite des Kunststoffelements einerseits und die axiale Stirnseite des Magnetelements stoffschlüssig miteinander verbunden.

Erfindungsgemäß wird an die Trägerhülse, insbesondere an die axiale Stirnseite der Hülse, ein Kunststoffelement aus Kunststoff befestigt, welches anschließend per Stoffschluss mit dem Magnetelement, insbesondere mit der Stirnseite des Magnetelements, verbunden wird. Dies reduziert den Herstellungsaufwand gegenüber dem Stand der Technik, da sich eine formschlüssige Verbindung zwischen dem Kunststoffelement und dem Magnetelement erübrigt, wie sie in der EP 1 123 794 B1 vorgeschlagen wird. Das Kunststoffelement braucht nämlich nicht in eine entsprechende Nut oder Öffnung des Magnetelements eingebettet zu werden. Stattdessen wird eine stoffschlüssige Verbindung vorgeschlagen, welche im Vergleich zu der formschlüssigen Verbindung gemäß dem Stand der Technik mit einem reduzierten Aufwand hergestellt werden kann.

Erfindungsgemäß erfolgt die Verbindung zwischen dem Magnetelement und dem Kunststoffelement ausschließlich stoffschlüssig.

Erfindungsgemäß wird vorgeschlagen, dass das stoffschlüssige Verbinden durch Verschweißen, insbesondere Laserschweißen und/oder Ultraschallschweißen, erfolgt. Auf diese Art und Weise kann der Herstellungsprozess ohne viel Aufwand automatisiert werden, und es muss anschließend keine Aushärtezeit abgewartet werden. Es braucht somit auch kein Klebstoff mühsam dosiert zu werden, was zusätzlich den Aufwand des Herstellungsprozesses weiterhin reduziert. Durch das Laserschweißen und/oder Ultraschallschweißen kann zwischen dem Magnetelement und dem Kunststoffelement außerdem eine besonders zuverlässige und robuste Verbindung geschaffen werden. Ein großer Vorteil dieser beiden Schweißverfahren ist auch der geringere Energieeintrag in die beiden Bauteile, was wiederum einen geringeren thermischen Verzug zur Folge hat. Außerdem sind die Prozesstechnologien Laserschweißen und Ultraschallschweißen industriell verfügbar, sodass mit diesen beiden Verfahren die beiderseitigen Kunststoffteile ohne viel Aufwand fest miteinander verbunden werden können.

Die Kunststoffmaterialien des Magnetelements und des Kunststoffelements sind bevorzugt Thermoplaste bzw. Plastomere, die sich in einem vordefinierten Temperaturbereich verformen lassen, wobei dieser Vorgang reversibel ist.

An der axialen Stirnseite des Kunststoffelements und/oder des Magnetelements wird erfindungsgemäß eine axiale Noppe ausgebildet, über welche das stoffschlüssige Verbinden durchgeführt wird. Eine solche Noppe bzw. Rippe stellt dann einen Energiekonzentrator für den Verbindungsvorgang dar und erleichtert somit insbesondere den Schweißprozess. Die Noppe ist insbesondere für einen Ultraschallschweißprozess besonders vorteilhaft.

Wird ein Ultraschallschweißen durchgeführt, so schmelzen das Magnetelement und das Kunststoffelement an der Kontaktfläche durch den axialen Druck auf und verbinden sich somit miteinander.

Wird hingegen das Laserschweißen verwendet, so bewegen sich die beiden Verbindungsteile während des Fügens nicht relativ zueinander, sodass eine präzise Positionierung möglich ist.

Im Allgemeinen können für eine bessere Positionierung des Magnetelements und des Kunststoffelements relativ zueinander Zentrierstrukturen an der Stirnseite des Magnetelements und/oder des Kunststoffelements angebracht werden, die insbesondere unabhängig von den Fügeflächen sind. Dies kann beispielsweise eine Stufe sein, mittels welcher das Magnetelement und das Kunststoffelement sicher in der Montagestellung relativ zueinander gehalten werden können. Es sind aber auch andere Zentrierhilfen möglich, wie beispielsweise in Form eines Zapfens einerseits und einer entsprechenden Bohrung andererseits.

Insbesondere für das Laserschweißen erweist es sich als vorteilhaft, wenn das Kunststoffelement aus einem transparenten Kunststoffmaterial bereitgestellt wird. Ein Laserstrahl kann dann auf die Kontaktfläche durch das Kunststoffelement hindurch gerichtet werden und erwärmt somit das lichtabsorbierende Magnetmaterial des Magnetelements bis zum Schmelzen. Das Kunststoffmaterial des Kunststoffelements schmilzt ebenfalls etwas auf, und es entsteht eine stoffschlüssige Verbindung.

Das Kunststoffmaterial des Kunststoffelements kann an die axiale Stirnseite der Trägerhülse beispielsweise angespritzt werden. Hier kann die Trägerhülse einen umlaufenden Flansch aufweisen, an welchem das Kunststoffmaterial des Kunststoffelements angespritzt wird. Zwischen dem Kunststoffelement einerseits und der Trägerhülse andererseits entsteht somit eine formschlüssige Verbindung.

Es erweist sich als besonders vorteilhaft, wenn bei dem Verbinden des Kunststoffelements mit der Trägerhülse ein Verdrehsicherungsformschluss zwischen dem Kunststoffelement und der Trägerhülse hergestellt wird. Durch einen solchen Formschluss können Relativbewegungen bzw. eine Relativdrehung der Trägerhülse relativ zum Kunststoffelement verhindert werden.

Der Verdrehsicherungsformschluss kann beispielsweise dadurch realisiert werden, dass in der Trägerhülse Öffnungen ausgebildet werden, in welche sich das Kunststoffmaterial des Kunststoffelements hineinerstreckt. Solche Öffnungen können beispielsweise in dem genannten Flansch der Trägerhülse bereitgestellt werden, sodass der Kunststoff des Kunststoffelements axial durch diese Öffnungen hindurchragt.

Ergänzend oder alternativ kann der Verdrehsicherungsformschluss durch einen wellen- und/oder zahnförmigen Außenrand der Trägerhülse, insbesondere des genannten Flansches, hergestellt werden. Auch diese Ausführungsform sorgt für einen zuverlässigen Verdrehschutz.

Die Erfindung betrifft außerdem eine Magneteinheit für eine Sensoreinrichtung, mit einem ringförmigen Magnetelement aus einem kunststoffgebundenen Magnetmaterial, und mit einer mit dem Magnetelement verbundenen Trägerhülse, über welche die Magneteinheit mit einem Wellenteil verbindbar ist. Das Magnetelement und die Trägerhülse sind insbesondere axial nebeneinander angeordnet und über jeweilige axiale Stirnseiten miteinander verbunden. An der Trägerhülse, insbesondere der axialen Stirnseite der Trägerhülse, ist ein Kunststoffelement angeordnet, welches mit dem Magnetelement, insbesondere mit der axialen Stirnseite des Magnetelements, stoffschlüssig verbunden ist.

Eine erfindungsgemäße Sensoreinrichtung ist zum Erfassen einer einen Rotationszustand einer Lenkwelle eines Kraftfahrzeugs charakterisierenden Messgröße ausgebildet und umfasst eine erfindungsgemäße Magneteinheit.

Ein erfindungsgemäßes Kraftfahrzeug, insbesondere ein Personenkraftwagen, umfasst eine erfindungsgemäße Sensoreinrichtung.

Die mit Bezug auf das erfindungsgemäße Verfahren vorgestellten bevorzugten Ausführungsformen und deren Vorteile gelten entsprechend für die erfindungsgemäße Magneteinheit, für die erfindungsgemäße Sensoreinrichtung sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1 und 2: in schematischer Darstellung eine Schnittansicht durch eine Magneteinheit gemäß einer Ausführungsform der Erfindung, wobei ein Ultraschallschweißen näher erläutert wird;
- Fig. 3: in schematischer Darstellung eine Schnittansicht durch eine Magneteinheit gemäß einer weiteren Ausführungsform der Erfindung; und
- Fig. 4: in schematischer Darstellung die Magneteinheit gemäß Fig. 3, wobei ein Laserschweißen näher erläutert wird.

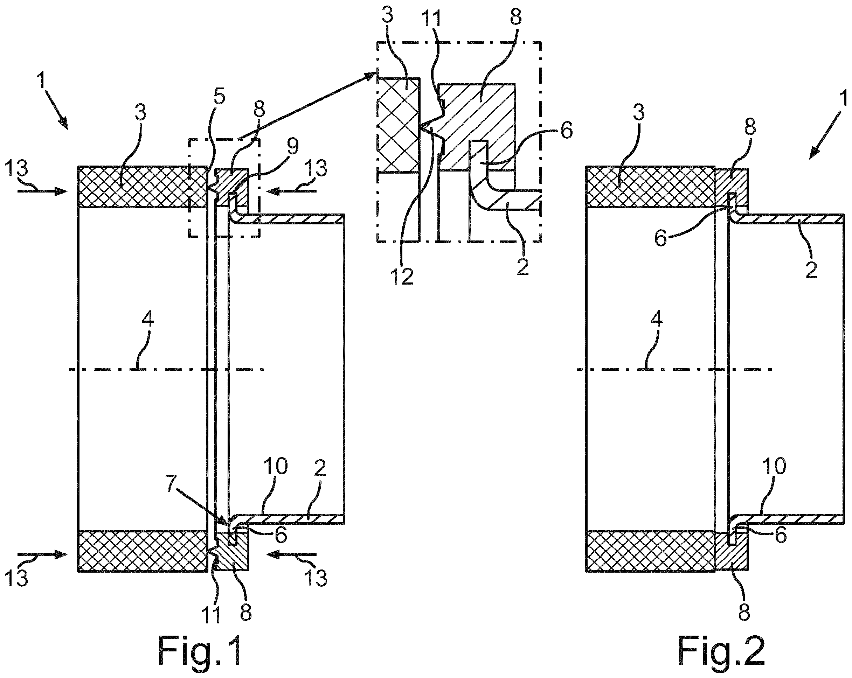

Eine in Fig. 1 dargestellte Magneteinheit 1 ist zum Einsatz in einem Kraftfahrzeug, insbesondere in einem Personenkraftwagen, konzipiert. Die Magneteinheit 1 ist Bestandteil einer Sensoreinrichtung, welche zum Erfassen eines Drehmoments und/oder eines Lenkwinkels einer Lenkwelle dient. Die Magneteinheit 1 wird dabei an einem Wellenteil der Lenkwelle befestigt.

Die Magneteinheit 1 umfasst eine aus Metall gebildete Trägerhülse 2 sowie ein Magnetelement 3, welches ein Dauermagnet aus einem kunststoffgebundenen Magnetmaterial ist. Das Magnetelement 3 ist also aus einem mit Magnetpartikeln gefüllten Kunststoff gebildet.

Das Magnetelement 3 ist ringförmig und wulstartig ausgebildet. Das Magnetelement 3 weist eine in axialer Richtung weisende und somit in Richtung einer Drehachse 4 zeigende axiale Stirnseite 5 auf, über welche das Magnetelement 3 mit der Trägerhülse 2 verbunden wird.

Die Trägerhülse 2 ist ebenfalls wulstartig und ringförmig ausgebildet und weist einen umlaufenden radialen Flansch 6 auf, der sich senkrecht zur Drehachse 4 erstreckt und radial nach außen weist. Der Flansch 6 bildet eine axiale Stirnseite 7 der Trägehülse 2 und dient zur Befestigung eines Kunststoffelements 8 an der Trägerhülse 2. Das Kunststoffelement 8 kann aus einem leicht elastischen Kunststoffmaterial gebildet sein. Das Kunststoffelement 8 ist radial über dem Flansch 6 angeordnet, sodass sich der Flansch 6 radial in das Kunststoffelement 8 hineinerstreckt. Mit anderen Worten umgreift das Kunststoffelement 8 beidseitig den Flansch 6.

Hinsichtlich der Befestigung des Kunststoffelements 8 an dem Flansch 6 kann vorgesehen sein, dass das Kunststoffmaterial des Kunststoffelements 8 an den Flansch 6 bzw. an die axiale Stirnseite 7 der Trägerhülse 2 angespritzt wird. Hierbei wird vorzugsweise ein Verdrehsicherungsformschluss hergestellt, sodass das Kunststoffelement 8 verdrehsicher an der Trägerhülse 2 gehalten werden kann. Es kann dazu beispielsweise ein Außenrand 9 des Flansches 6 wellenförmig und/oder zahnförmig ausgebildet sein, sodass dieser Außenrand keine ideale Ringform aufweist. Die Wellenform umfasst dabei beispielsweise auch eine Ellipsenform. Ergänzend oder alternativ können in dem Flansch 6 auch Durchgangsöffnungen vorgesehen sein, durch welche sich das Kunststoffmaterial des Kunststoffelements 8 hindurcherstreckt.

Insgesamt ist vorgesehen, dass das Magnetelement 3 und die Trägerhülse 2 über die jeweiligen axialen Stirnseiten 5 bzw. 7 derart axial miteinander verbunden werden, dass sie axial nebeneinander angeordnet sind. Es ist jedoch auch eine Anordnung des Magnetelements 3 radial über der Trägerhülse 2 möglich.

Der Flansch 6 steht von einem wulstartigen Grundkörper 10 der Trägerhülse 2 radial nach außen ab. Das Kunststoffelement 8 ist sowohl vom Innen- als auch vom Außendurchmesser so gestaltet, dass eine axiale Stirnseite 11 des Kunststoffelements 8 und die axiale Stirnseite 5 des Magnetelements 3 axial einander gegenüberliegen. Der Innendurchmesser des Magnetelements 3 kann prinzipiell auch kleiner als der Innendurchmesser des Grundkörpers 10 der Trägerhülse 2 sein.

Im Ausführungsbeispiel gemäß Fig. 1 ist an der axialen Stirnseite 11 des ringförmigen Kunststoffelements 8 eine in axialer Richtung weisende Noppe 12 bzw. eine Rippe ausgebildet. Diese Noppe 12 kann eine umlaufende Noppe sein. Alternativ kann die Noppe 12 die Form eines Ringsegments bzw. Ringabschnitts aufweisen. Es können auch mehrere solche Noppen 12 vorgesehen sein, die in Umlaufrichtung verteilt angeordnet sind.

Ergänzend oder alternativ kann eine solche Noppe 12 auch an der axialen Stirnseite 5 des Magnetelements 3 ausgebildet sein.

Die Noppe 12 dient als Energiekonzentrator, um das Verschweißen des Magnetelements 3 und des Kunststoffelements 8 miteinander mittels Ultraschalls zu erleichtern.

Im Ausführungsbeispiel gemäß Fig. 1 wird die Stirnseite 5 des Magnetelements 3 mit der Stirnseite 11 des Kunststoffelements 8 mittels Ultraschallschweißens stoffschlüssig verbunden. Hierbei wird gemäß den Pfeildarstellungen 13 in axialer Richtung Druck unter Ultraschalleinwirkung erzeugt, sodass das Magnetelement 3 einerseits und das Kunststoffelement 8 andererseits an der Kontaktfläche aufschmelzen und sich somit stoffschlüssig miteinander verbinden. Dazu wird das Material der Noppe 12 genutzt. Die Magneteinheit 1 nach dem Ultraschallschweißen ist in Fig. 2 gezeigt.

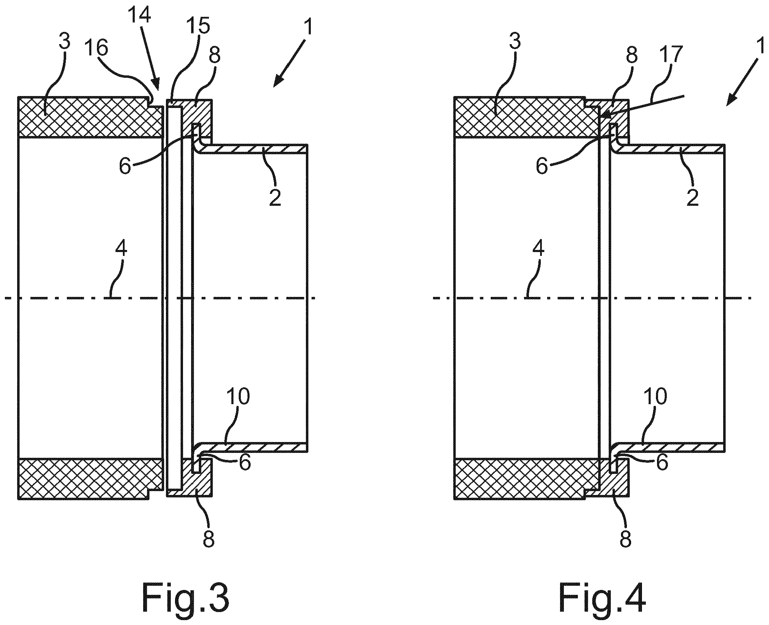

Bezug nehmend auf Fig. 3 kann bei sämtlichen Ausführungsformen auch vorgesehen sein, dass die Magneteinheit 1 eine Zentrierstruktur 14 aufweist, welche zur gegenseitigen Ausrichtung bzw. Positionierung des Magnetelements 3 und des Kunststoffelements 8 relativ zueinander dient. Eine solche Zentrierstruktur 14 kann, wie in Fig. 3 dargestellt, einen axialen Vorsprung 15 aufweisen, welcher mit einer korrespondierenden Stufe 16 in Anlage gebracht werden kann. Im Ausführungsbeispiel ist der axiale Vorsprung 15 an dem Kunststoffelement 8 ausgebildet, während die Stufe 16 an dem Magnetelement 3 vorgesehen ist. Diese Zentrierstruktur 14 ist somit unabhängig von den Fügeflächen. Es sind auch andere Zentrierhilfen möglich, wie beispielsweise in Form eines Zapfens und einer entsprechenden Bohrung.

Eine solche Zentrierstruktur 14, wie sie in Fig. 3 dargestellt ist, kann auch in der Ausführungsform gemäß den Fig. 1 und 2 vorgesehen sein.

Alternativ oder zusätzlich zu dem Ultraschallschweißen kann auch ein Laserschweißen des Magnetelements 3 mit dem Kunststoffelement 8 vorgesehen sein. Hier wird das Kunststoffelement 8 aus einem für den Laserstrahl transparenten Kunststoffmaterial ausgebildet, sodass der Laserstrahl das Kunststoffmaterial des Kunststoffelements 8 durchdringen kann. Ein solcher Verbindungsvorgang ist in Fig. 4 gezeigt. Hier wird das Laserschweißgerät so ausgerichtet und positioniert, dass sich der erzeugte Laserstrahl 17 durch das transparente Kunststoffelement 8 hindurch ausbreiten kann, um dann auf die axiale Stirnseite 5 des Magnetelements 3 treffen zu können. Der Laserstrahl 17 wird also auf die Kontaktfläche gerichtet und erwärmt somit das Magnetmaterial des Magnetelements 3 bis zum Schmelzen. Das Kunststoffmaterial des Kunststoffelements 8 schmilzt ebenfalls etwas auf. Bei diesem Verfahren bewegen sich die beiden Teile während des Fügens nicht relativ zueinander, sodass eine präzise Positionierung möglich ist.

In sämtlichen Ausführungsformen kann auch vorgesehen sein, dass die stoffschlüssige Verbindung zwischen dem Magnetelement 3 und dem Kunststoffelement 8 vollumfänglich und somit über den gesamten Umfang gleichmäßig erfolgt. Möglich ist aber auch eine segmentweise Kontaktfläche über einzelne Ringsegmente. Dabei kann das Kunststoffelement 8 über den gesamten Umfang mit einem der Bauteile, Magnetelement 3 oder Trägerhülse 2, und über einzelne Ringsegmente bzw. Vorsprünge mit dem anderen Bauteil verbunden sein. Alternativ kann das Zwischenelement 8 auch in einzelne Ringsegmente aufgeteilt sein, welche dann mit der Trägerhülse 2 und dem Magnetelement 3 verbunden sind.

## Patentansprüche

1. Verfahren zum Herstellen einer Magneteinheit (1) für eine Sensoreinrichtung zum Erfassen einer einen Rotationszustand einer Lenkwelle eines Kraftfahrzeugs charakterisierenden Messgröße durch:
- Bereitstellen eines ringförmigen Magnetelements (3) aus einem kunststoffgebundenen Magnetmaterial,
- Bereitstellen einer Trägerhülse (2) zum Verbinden der Magneteinheit (1) mit einem Wellenteil der Lenkwelle,
- Bereitstellen eines Kunststoffelements (8) an der Trägerhülse (2) und
- stoffschlüssiges Verbinden des Kunststoffelements (8) und des kunststoffgebundenen Magnetmaterials des Magnetelements (3) durch Verschweißen
**dadurch gekennzeichnet, dass**
ein Kunststoffmaterial des Kunststoffelements (8) an eine axiale Stirnseite (7) der Trägerhülse (2) angespritzt wird, wobei das Kunststoffelement (8) formschlüssig mit der Trägerhülse (2) verbunden wird und an einer axialen Stirnseite (11) des Kunststoffelements (8) und/oder an einer axialen Stirnseite (5) des Magnetelements (3) eine axiale Noppe (12) ausgebildet wird, über welche das stoffschlüssige Verbinden durchgeführt wird.

2. Verfahren nach Anspruch 1,
**dadurch gekennzeichnet, dass**
das Magnetelement (3) und die Trägerhülse (2), insbesondere axial nebeneinander, über jeweilige axiale Stirnseiten (5, 7) miteinander verbunden werden, wobei das Kunststoffelement (8) und die axiale Stirnseite (5) des Magnetelements (3) stoffschlüssig miteinander verbunden werden.

3. Verfahren nach Anspruch 1 oder 2,
**dadurch gekennzeichnet, dass**
das stoffschlüssige Verbinden durch Laserschweißen und/oder Ultraschallschweißen erfolgt.

4. Verfahren nach einem der vorhergehenden Ansprüche,
**dadurch gekennzeichnet, dass**
das Kunststoffelement (8) aus einem transparenten Kunststoffmaterial bereitgestellt wird.

5. Verfahren nach einem der vorhergehenden Ansprüche,
**dadurch gekennzeichnet, dass**
bei dem Verbinden des Kunststoffelements (8) mit der Trägerhülse (2) ein Verdrehsicherungsformschluss zwischen dem Kunststoffelement (8) und der Trägerhülse (2) hergestellt wird.

6. Verfahren nach Anspruch 5,
**dadurch gekennzeichnet, dass**
der Verdrehsicherungsformschluss durch Öffnungen in der Trägerhülse (2) hergestellt wird, in welche sich das Kunststoffelement (8) hineinerstreckt.

7. Verfahren nach Anspruch 5 oder 6,
**dadurch gekennzeichnet, dass**
der Verdrehsicherungsformschluss durch einen wellen- und/oder zahnförmigen Außenrand (9) der Trägerhülse (2) hergestellt wird.

8. Magneteinheit (1) für eine Sensoreinrichtung zum Erfassen einer einen Rotationszustand einer Lenkwelle eines Kraftfahrzeugs charakterisierenden Messgröße, mit einem ringförmigen Magnetelement (3) aus einem kunststoffgebundenen Magnetmaterial, mit einer Trägerhülse (2), über welche die Magneteinheit (1) mit einem Wellenteil der Lenkwelle verbindbar ist, und einem an der Trägerhülse (2) angeordnetem Kunststoffelement (8), welches mit dem kunststoffgebundenen Magnetmaterial des Magnetelements (3) stoffschlüssig durch Verschweißen verbindbar ist, **dadurch gekennzeichnet, dass**
ein Kunststoffmaterial des Kunststoffelements (8) an eine axiale Stirnseite (7) der Trägerhülse (2) angespritzt ist, um das Kunststoffelement (8) formschlüssig mit der Trägerhülse (2) zu verbinden, und das Kunststoffelement (8) und/oder das Magnetelement (3) an einer axialen Stirnseite (11) eine axiale Noppe (12) aufweist, über welche die stoffschlüssige Verbindung bereitgestellt ist.

9. Sensoreinrichtung zum Erfassen einer einen Rotationszustand einer Lenkwelle eines Kraftfahrzeugs charakterisierenden Messgröße, umfassend eine Magneteinheit (1) nach Anspruch 8.

10. Kraftfahrzeug mit einer Sensoreinrichtung nach Anspruch 9.

## Claims

1. Method for producing a magnet unit (1) for a sensor device for detecting a measured value characteristic of a rotational state of a steering shaft of a motor vehicle, by:
- providing an annular magnet element (3) made of a plastic-bonded magnet material,
- providing a carrier sleeve (2) for connecting the magnet unit (1) to a shaft part of the steering shaft,
- providing a plastic element (8) on the carrier sleeve (2) and
- integrally connecting the plastic element (8) and the plastic-bonded magnet material of the magnet element (3) by means of welding,
**characterized in that**
a plastic material of the plastic element (8) is moulded onto an axial end face (7) of the carrier sleeve (2), wherein the plastic element (8) is connected to the carrier sleeve (2) by a form fit and an axial stud (12), via which the integral connection is made, is formed on an axial end face (11) of the plastic element (8) and/or on an axial end face (5) of the magnet element (3).

2. Method according to Claim 1,
**characterized in that**
the magnet element (3) and the carrier sleeve (2) are connected to each other via respective axial end faces (5, 7), in particular axially beside each other, wherein the plastic element (8) and the axial end face (5) of the magnet element (3) are integrally connected to each other.

3. Method according to Claim 1 or 2,
**characterized in that**
the integral connection is carried out by laser welding and/or ultrasonic welding.

4. Method according to one of the preceding claims, **characterized in that**
the plastic element (8) is provided from a transparent plastic material.

5. Method according to one of the preceding claims, **characterized in that**
during the connection of the plastic element (8) to the carrier sleeve (2), an anti-rotation form fit is produced between the plastic element (8) and the carrier sleeve (2).

6. Method according to Claim 5,
**characterized in that**
the anti-rotation form fit is produced by openings in the carrier sleeve (2) into which the plastic element (8) extends.

7. Method according to Claim 5 or 6,
**characterized in that**
the anti-rotation form fit is produced by a wave- and/or tooth-like outer edge (9) of the carrier sleeve (2).

8. Magnet unit (1) for a sensor device for detecting a measured value characteristic of a rotational state of a steering shaft of a motor vehicle, having an annular magnet element (3) made of a plastic-bonded magnet material, having a carrier sleeve (2) via which the magnet unit (1) can be connected to a shaft part of the steering shaft, and a plastic element (8) arranged on the carrier sleeve (2), which can be connected integrally to the plastic-bonded magnet material of the magnet element (3) by welding,
**characterized in that**
a plastic material of the plastic element (8) is moulded onto an axial end face (7) of the carrier sleeve (2) in order to connect the plastic element (8) to the carrier sleeve (2) by a form fit, and the plastic element (8) and/or the magnet element (3) has an axial stud (12), via which the integral connection is provided, on an axial end face (11).

9. Sensor device for detecting a measured value characteristic of a rotational state of a steering shaft of a motor vehicle, comprising a magnet unit (1) according to Claim 8.

10. Motor vehicle having a sensor device according to Claim 9.

## Revendications

1. Procédé de fabrication d'une unité magnétique (1) pour un dispositif de capteur pour détecter une grandeur de mesure caractérisant un état de rotation d'un arbre de direction d'un véhicule automobile par :
- fourniture d'un élément magnétique annulaire (3) constitué d'un matériau magnétique noyé dans du plastique,
- fourniture d'un manchon de support (2) pour la connexion de l'unité magnétique (1) à une partie d'arbre de l'arbre de direction,
- fourniture d'un élément en plastique (8) sur le manchon de support (2) et
- connexion par liaison de matière de l'élément en plastique (8) et du matériau magnétique noyé dans le plastique de l'élément magnétique (3) par soudage,
**caractérisé en ce**
**qu'**une matière plastique de l'élément en plastique (8) est surmoulée sur un côté frontal axial (7) du manchon de support (2), l'élément en plastique (8) étant connecté par engagement par correspondance de formes au manchon de support (2) et une protubérance axiale (12) étant réalisée au niveau d'un côté frontal axial (11) de l'élément en plastique (8) et/ou au niveau d'un côté frontal axial (5) de l'élément magnétique (3), par le biais de laquelle protubérance est réalisée la connexion par liaison de matière.

2. Procédé selon la revendication 1,
**caractérisé en ce que**
l'élément magnétique (3) et le manchon de support (2) sont connectés l'un à l'autre notamment axialement l'un à côté de l'autre, par le biais de côtés frontaux axiaux respectifs (5, 7), l'élément en plastique (8) et le côté frontal axial (5) de l'élément magnétique (3) étant connectés l'un à l'autre par engagement par liaison de matière.

3. Procédé selon la revendication 1 ou 2,
**caractérisé en ce que**
la connexion par engagement par liaison de matière est réalisée par soudage au laser et/ou par soudage aux ultrasons.

4. Procédé selon l'une quelconque des revendications précédentes,
**caractérisé en ce que**
l'élément en plastique (8) est produit à partir d'une matière plastique transparente.

5. Procédé selon l'une quelconque des revendications précédentes,
**caractérisé en ce que**
lors de la connexion de l'élément en plastique (8) avec le manchon de support (2), un engagement par correspondance de formes antirotation est établi entre l'élément plastique (8) et le manchon de support (2).

6. Procédé selon la revendication 5,
**caractérisé en ce que**
l'engagement par correspondance de formes antirotation est établi par des ouvertures dans le manchon de support (2) dans lesquelles est enfiché l'élément en plastique (8).

7. Dispositif selon la revendication 5 ou 6, **caractérisé en ce que**
l'engagement par correspondance de formes anti rotation est établi par un bord extérieur (9) de forme ondulée et/ou dentée du manchon de support (2) .

8. Unité magnétique (1) pour un dispositif de capteur pour détecter une grandeur de mesure caractérisant un état de rotation d'un arbre de direction d'un véhicule automobile, comprenant un élément magnétique annulaire (3) constitué d'un matériau magnétique noyé dans du plastique, comprenant un manchon de support (2) par le biais duquel l'unité magnétique (1) peut être connectée à une partie d'arbre de l'arbre de direction, et un élément en plastique (8) disposé sur le manchon de support (2), lequel peut être connecté par liaison de matière par soudage au matériau magnétique noyé dans le plastique de l'élément magnétique (3), **caractérisée en ce**
**qu'**un matériau en plastique de l'élément en plastique (8) est surmoulé sur un côté frontal axial (7) du manchon de support (2) afin de connecter l'élément en plastique (8) par engagement par correspondance de formes au manchon de support (2) et l'élément en plastique (8) et/ou l'élément magnétique (3) présentent, au niveau d'un côté frontal axial (11), une protubérance axiale (12) par le biais de laquelle est établie la connexion par engagement par liaison de matière.

9. Dispositif de capteur pour détecter une grandeur de mesure caractérisant un état de rotation d'un arbre de direction d'un véhicule automobile, comprenant une unité magnétique (1) selon la revendication 8.

10. Véhicule automobile comprenant un dispositif de capteur selon la revendication 9.
